# EUROPEAN PATENT APPLICATION

(11) **EP 4 703 631 A1**
(43) Date of publication of application: **04.03.2026**
(21) Application number: 24197420.3
(22) Date of filing: 29.08.2024
(51) Int. Cl.: F21S 43/14, F21S 43/15, F21S 43/16

(54) **LUMINOUS DEVICE FOR A MOTOR VEHICLE**

(71) Applicant: Valeo Vision, 93012 Bobigny Cedex (FR)
(72) Inventor: BEDDAR, Sidahmed, 93000 BOBIGNY (FR); DAROUSSIN, Samuel, 93000 BOBIGNY (FR)
(74) Representative: Valeo Visibility

(57) **Abstract**

The present invention pertains to a luminous device (100, 200) for a motor vehicle. The luminous device (100, 200) comprises two or more light sources (112, 212) emitting light of at least two distinct colours. An optical component such as a light guide (104) or a reflector (204) is provided to distribute light emitted by the light sources (112, 212), outwards through a lens (108, 208). Further, a light converting material (106, 206) is provided to convert the colour of light passing through it. The composition of the light converting material (106, 206) allows to achieve number of colours of light emitted by the device (100, 200) being more than the number of colours of light generated by the light sources (112, 212).

## Description

### TECHNICAL FIELD OF THE INVENTION

The present invention relates to a luminous device for a motor vehicle, and more particularly to a luminous device arrangement having a light-converting material.

### BACKGROUND OF THE INVENTION

In vehicles, lighting devices having large emitting surfaces may be used for lighting and signaling functions such as ADS (Adaptive Driving System) marker, turn indication, DRL (Daytime Running Light), PL (parking light), reverse indication, tail lamp, autonomous driving indication, electric car indication etc. These large emitting surfaces may also be used for styling and decorative purposes such as but not limited to illuminated grills, illuminated logo, animation, welcome light etc.

In these lighting devices, it is required to get homogenous illumination of the large emitting surface to achieve desired lighting functions and to meet the regulations. In conventional lighting devices, a diffuser layer is used to get homogenous light surface. However, light transmission efficiency of the diffuser layer is very less due to its opaque aspect. Moreover, the diffuser film/layer being costly increases the overall cost of the lighting device having the diffuser film/layer on the large emitting surface.

Further, different light colours may be used for different lighting functions. For example, white light may be used for the lighting functions such as DRL, PL, reverse indication etc., red/amber light may be used for turn indication, stop indication etc., and cyan/turquoise colour light may be used to represent electric car, autonomous driving, ADS etc. Further, light of any other colour may be desired for decorative, styling and/or animation lighting functions. Therefore, lighting devices having multiple lighting modules and/or multiple optical components may be required thereby increasing number of components, manufacturing and assembly time, packaging space and cost of the lighting device.

The prior art and the conventional lighting devices have various disadvantages as described above and there is a need for an improved lighting device that can overcome the disadvantages of the conventional lighting device.

### SUMMARY OF THE INVENTION

An object of the present invention is to solve the disadvantages described above of known lighting device. In particular, the object of the present invention is to provide a luminous device having a homogenous lighting surface.

Another object of the present invention is to improve efficiency of light emitting surfaces with homogenous emission of light.

Yet another object of the present invention is to provide a light-converting material in the luminous device to improve light transmission efficiency of large lighting surfaces.

Yet another object of the present invention is to provide a luminous device that can emit light of different colours to perform different lighting functions.

Yet another object of the present invention is to provide a luminous device that may emit number of light colours greater than the number of light colours emitted by the light sources.

According to the present invention, there is provided a luminous device comprising at least two light sources, an optical component and a light-converting material. The optical component is adapted to distribute light emitted by the light sources. The light-converting material is adapted to convert a colour of the light emitted by the light sources or to convert a colour of the light distributed by the optical component, into a different colour. The colours of the light emitted by the light sources and the composition of the light-converting material are adapted to obtain a number of colours of light exiting the luminous device, said number of colours being greater than the number of colours of the light emitted by the light sources. Preferably, the light sources may produce light of at least two distinct colours and the composition of the light-converting material may allow the luminous device to emit light of at least three different colours, by converting the colours of light emitted/generated by the light sources. Therefore, the luminous device may be used to perform multiple lighting functions such as but not limited to ADS (Adaptive Driving System) marker, turn indication, DRL (Daytime Running Light), PL (parking light), reverse indication, tail lamp, autonomous driving indication, electric car indication etc. The light sources may be any solid state light sources such as light emitting diodes (LED) etc.

In a non-limiting embodiment of the present invention, the optical component distributes light emitted by the light sources, outward through a lens. The optical component may be adapted to direct light rays emitted by the light sources, substantially parallel to an optical axis of the lens.

In a non-limiting embodiment of the present invention, the light-converting material may be integrally formed with the optical component by co-moulding process or by printing an ink including the composition of the light-converting material on the optical component. Any other suitable method may be used to integrally form the light-converting material with the optical component. Integrating the light-converting material with the optical component may reduce assembly time, part count, and/or may eliminate the need of securing means for attaching the light-converting material with the optical component.

In another non-limiting embodiment of the present invention, the light-converting material may be integrally formed with the lens by co-moulding process or by printing an ink including the composition of the light-converting material on the lens. Any other suitable method may be used to integrally form the light-converting material with the lens. Integrating the light-converting material with the lens may reduce assembly time, part count, and/or may eliminate the need of securing means.

In an alternate non-limiting embodiment of the present invention, the light-converting material may be formed as a film, and the film may be applied to the optical component by an adhesive. The refractive index of the adhesive may be suitably selected to get homogenous light distribution. Preferably, refractive index of the adhesive may be selected complementing the refractive index of the optical component and the refractive index of the light-converting material.

In an alternate non-limiting embodiment of the present invention, the light-converting material may be formed as a film and the film may be applied to the lens by an adhesive. The refractive index of the adhesive may be suitably selected to get homogenous light distribution. Preferably, refractive index of the adhesive may be selected complementing the refractive index of the lens and the refractive index of the light-converting material.

In a non-limiting embodiment of the present invention, the optical component may include a light guide comprising plurality of optical prisms provided on a back surface, the optical prisms being adapted to direct the light received in the light guide through a collector, through a front surface. The light guide may be provided in a predefined configuration with the light sources such that the light emitted by the light sources enters the light guide through the collector. The light then travels in the light guide by total internal reflection. When the light ray is incident on any of the optical prisms, the light is diverted towards outside of the light guide and the light ray exits through the front surface of the light guide.

In a non-limiting embodiment of the present invention, the light guide may be a light guide plate. The light guide plate may have any predefined polygonal or circular shape and the collector may be formed at any one side or on at least a part of one side, to receive light emitted by the light sources. Alternatively, the collector may be formed at plurality of sides of the light guide plate.

In a non-limiting embodiment of the present invention, the plurality of optical prisms may be provided in a pattern corresponding to a pattern of the light-converting material. The light-converting material may cover entire front surface of the light guide. Alternatively, the light-converting material may be provided in shape of a logo or a signature or any other pattern. The plurality of optical prisms may be provided in the shape or pattern similar to the shape/pattern of the light-converting material. So, in lit condition of the luminous device, the logo, the pattern, or the signature is illuminated.

In another non-limiting embodiment of the present invention, the optical component may be a reflector. The reflector may be arranged in a predefined configuration with the light sources such that light emitted by the light sources may be reflected by a reflecting surface of the reflector, in a direction substantially parallel to an optical axis of the lens.

In a non-limiting embodiment of the present invention, the plurality of light sources include a first group of light sources emitting light of a first colour, and a second group of light sources emitting light of a second colour. Preferably, each of the first group of light sources and the second group of light sources may include at least one light source. The first group of light sources and the second group of light sources may be arranged on a PCB in a predefined manner.

In a non-limiting embodiment of the present invention, the first colour may be blue and the second colour may be red or amber, or vice versa. The first group of light sources may emit light of first colour and the second group of light sources may emit light of second colour.

In a non-limiting embodiment of the present invention, the light-converting material is adapted to emit light of cyan/turquoise colour when the light source(s) emitting blue light is/are turned ON and the light source(s) emitting red or amber light are turned OFF. The composition of the light-converting material converts blue colour light into cyan/turquoise colour light. So, when the desired colour of the lighting function is cyan/turquoise, only blue light source(s) is/are turned ON.

In a non-limiting embodiment of the present invention, the light-converting material is configured to emit light of white colour when the light source(s) emitting blue light and light source(s) emitting red or amber light are turned ON. The composition of the light-converting material converts mixed light of blue colour and red/amber colour, into white colour. So, when the desired colour of the lighting function is white, light source(s) of both the colours i.e. blue colour and red/amber colour are turned ON.

In a non-limiting embodiment of the present invention, the light-converting material is configured to emit light of red colour when the light source(s) emitting red or amber light is/are turned ON and the light source(s) emitting blue light is/are turned OFF. So, when the desired colour of the lighting function is red, only red/amber light source(s) is turned ON.

In a non-limiting embodiment of the present invention, the composition of the light-converting material may include cyan emitting phosphor. The composition of the cyan emitting phosphor may be any of Ca₂LuHf₂Al₃O₁₂ (CLHAO), LiBaBO₃:Eu²⁺ etc.

The present invention also relates to a vehicle lighting module comprising a housing configured to accommodate a PCB, and the luminous device as described above. The luminous device may be arranged inside the housing in a predefined configuration. The light sources may be arranged on the PCB in a predefined configuration. The vehicle lighting module may be used for multiple lighting functions. Especially, multiple lighting functions having different colour requirements may be achieved with the single lighting module.

### BRIEF DESCRIPTION OF DRAWINGS

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig.1A illustrates a schematic perspective view of a luminous device, according to an embodiment of the present invention;
Fig.1B illustrates an exploded view of the luminous device, according to an embodiment of the present invention;
Figs. 2A, 2B and 2C illustrate a front perspective view, a back perspective view and a side view of a light guide, according to an embodiment of the present invention;
Fig.3A illustrates a sectional view of the luminous device taken along line A-A in Fig. 1, according to an embodiment of the present invention;
Fig. 3B illustrates a zoomed view of zone 'Z1' of Fig. 3A by removing housing, according to an embodiment of the present invention;
Fig. 3C illustrates a zoomed view of zone 'Z1' of Fig. 3A by removing housing, according to an alternate embodiment of the present invention;
Fig. 3D illustrates a zoomed view of the luminous device, according to an alternate embodiment of the present invention;
Figs. 4A and 4B illustrate schematic views of a luminous device having a reflector, according to an embodiment of the present invention;
Fig. 4C illustrates a schematic view of a luminous device having a reflector, according to an alternate embodiment of the present invention;
Fig. 4D illustrates a schematic view of a luminous device having a reflector, according to an alternate embodiment of the present invention;
Figs. 5A, 5B and 5C illustrate a PCB having different arrangement of light sources, according to an embodiment of the present invention; and
Fig. 6 illustrates a chromaticity graph indicating coordinates of colours, according to an embodiment of the present invention.

### DETAILED DESCRIPTION OF THE INVENTION

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

Items shown in the drawings are not to the scale and are simplified to increase clarity of disclosure.

The following embodiments are examples. Although the description refers to one or more embodiments, this does not necessarily mean that each reference is to the same embodiment, or that the features apply only to one embodiment. Simple features of different embodiments may also be combined and/or interchanged to provide further embodiments.

In the present description, certain elements or parameters may be indexed, for example first element or second element as well as first parameter and second parameter or first criterion and second criterion, etc. In this case, it is a simple indexing operation to differentiate and name elements or parameters or criteria which are close, but not identical. In this case, simple indexing is used to differentiate and name elements or parameters or criteria which are close, but not identical. This indexing does not imply that one element, parameter or criterion has priority over another, and such names can easily be interchanged without going beyond the scope of this description. Nor does this indexing imply an order in time, for example to assess a particular criterion.

In the following description, the sign "<" refers to indicate that the parameter mentioned before the sign "<" is less than the parameter mentioned after the sign "<". The term "inner surface" of the lens refers to the surface of the lens, facing the optical component and the term "outer surface" of the lens refers to the surface of the lens, facing away from the optical component.

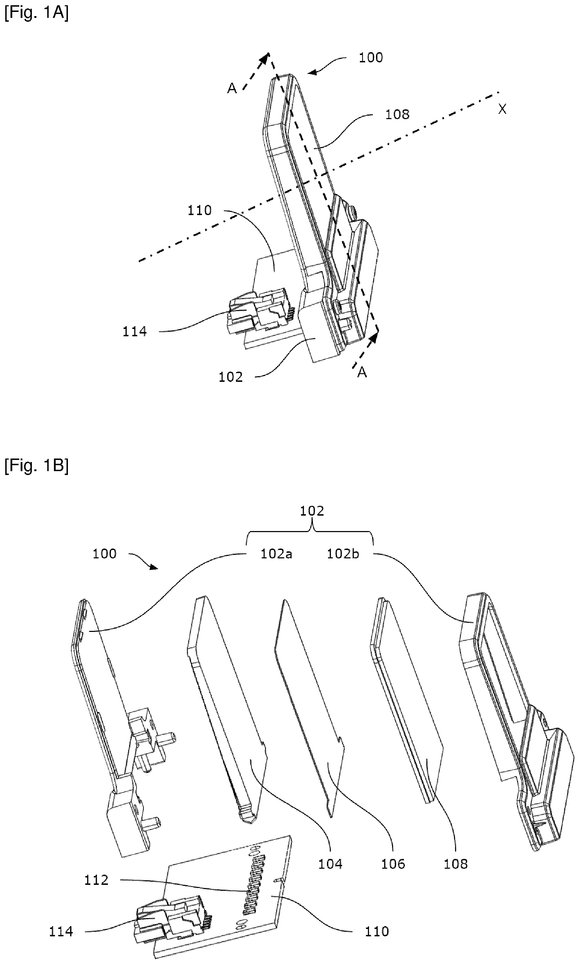

A luminous device 100 according to an embodiment of the present invention, is shown in Figs. 1A and 1B. The luminous device 100 may include a printed circuit board (PCB) 110 that may be electrically connected to vehicle electrical system through a connector 114. Two or more light sources 112 may be provided on the PCB 110 in a predefined configuration. An optical component such as a light guide 104 may be provided to receive light emitted by the light sources 112, and to distribute the received light substantially parallel to an optical axis 'X' of a lens 108. The lens 108 may be arranged in front of the light guide 104 as shown in Fig. 1B. A light-converting material 106 may be provided to convert colour of the light distributed by the light guide 104. The light-converting material 106 may be provided between the light guide 104 and the lens 108. A housing 102 may be provided to encase and support the PCB 110, the lens 108, the light guide 104 and any other components required for the proper working of the luminous device 100. The housing 102 may be formed in two parts for ease of assembly, such as a first housing part 102a and a second housing part 102b connected to each other in any known manner to define a space for accommodating and supporting the aforesaid components.

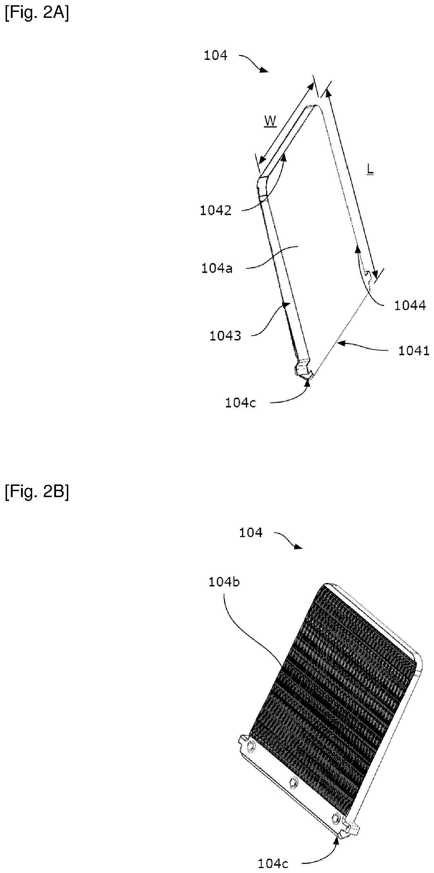

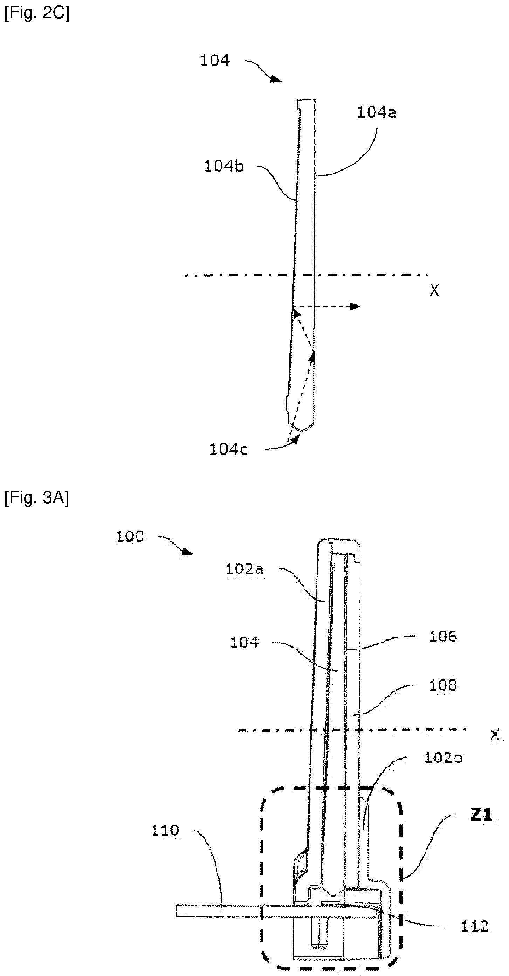

Figs. 2A to 2C show the light guide 104 according an embodiment of the present invention. The light guide 104 may include a front surface 104a, a back surface 104b, and a predefined thickness formed between the front surface 104a and the back surface 104b. A collector 104c may be formed at one side of the light guide 104, to receive/collect light emitted by the light sources 112. As shown in Fig. 2B, the back surface 104b may include a plurality of optical prisms to distribute the light rays traveling through the light guide 104. The plurality of prisms are integrally formed on the back surface 104b. As illustrated in Fig. 2C, the light rays received in the light guide 104 travels towards opposite end by total internal reflection. When the light traveling through the light guide 104 is incident on any of the optical prisms, the light is diverted in a direction substantially perpendicular to the first surface 104a, as shown in Fig. 2C by a dotted arrow representing light ray. It is to be understood that a single light ray is shown in Fig. 2C for explanation only and plurality of light rays emitted by the light sources 112 may enter the light guide 104 through the collector 104c and my exit the light guide 104 through the front surface 104a.

In an embodiment of the present invention, the light guide 104 may be a light guide plate having longitudinal sides 1043, 1044 along length 'L' of the light guide 104 and lateral sides 1041, 1042 along width 'W' of the light guide 104, as shown in Fig. 2A. In case of the light guide 104 having square shape, any two opposite sides may be termed as longitudinal sides and remaining sides may be termed as lateral sides. The collector 104c may be formed at any one or both the longitudinal sides of the light guide 104. Alternatively, the collector 104c may be formed at any one or both the lateral sides of the light guide 104. Alternatively, the collector 104c may be formed at any one or both the longitudinal sides and any one or both the lateral sides. Preferably, the collector 104c may be formed on at least one of the longitudinal sides or at least one of the lateral sides. For example, as shown in Fig. 2A, the collector 104c may be formed at one lateral side 1041 and extends from one longitudinal side 1043 to other longitudinal side 1044 of the light guide 104. The light guide 104 may have any other polygonal or circular shape, and the collector 104c may be formed at least partially on any of the sides of the polygonal shape or on the curved side of the circular shape.

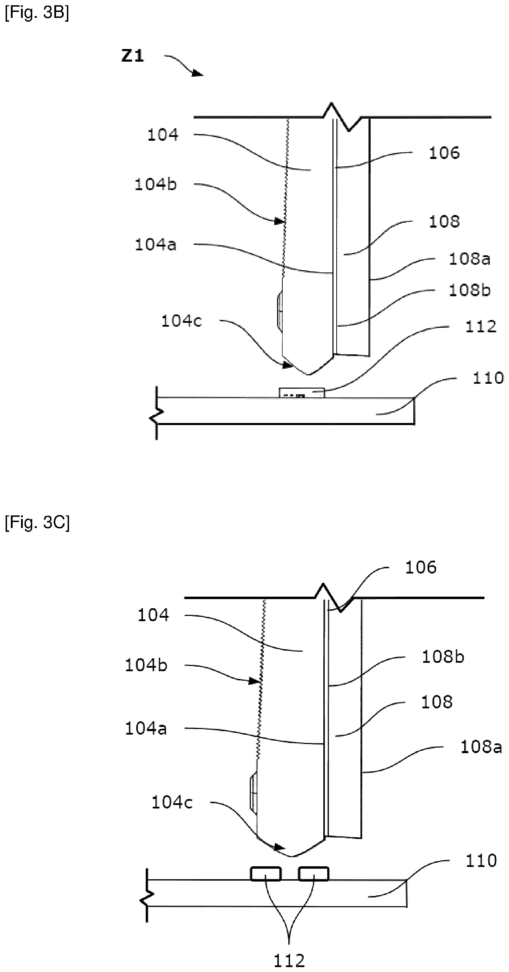

Figs. 3A and 3B show sectional views of the luminous device 100. As shown, the light guide 104 may be arranged with respect to the PCB 110 such that the collector 104c may receive the light emitted by the light sources 112. As shown in Fig. 3B, the plurality of light sources 112 may be arranged in a line extending along the extension of the collector 104c i.e. along the direction of corresponding longitudinal side(s) or corresponding lateral side(s) of the light guide. It is to be noted that in Fig. 3B, only one light source 112 is seen as the light sources are arranged along a line perpendicular to the plane of figure. Alternatively, at least two of the plurality of light sources 112 may be arranged on the PCB 110 along a direction perpendicular to the corresponding longitudinal side(s) or the corresponding lateral side(s) of the light guide, i.e. along thickness direction of the light guide 104. For example, as shown in Fig. 3C, the light sources 112 may be provided along thickness direction of the light guide 104. There may be provided two parallel lines of light sources 112, each line including at least one light source 112. It is to be noted that in Fig. 3C, only one light source 112 is seen in each line as the light sources 112 in each line are arranged along a line perpendicular to the plane of figure.

In an embodiment of the present invention, the light-converting material 106 may be provided between the light guide 104 and the lens 108, as shown in Figs. 3A, 3B and 3C. The light-converting material 106 may be integrally formed with the optical component i.e. with the light guide 104. The light-converting material 106 may be formed on the front surface 104a of the light guide 104 by a co-moulding process. Alternatively, the light-converting material 106 may be formed on the front surface 104a of the light guide 104, by ink printing process i.e. by printing/depositing an ink including the light-converting material 106.

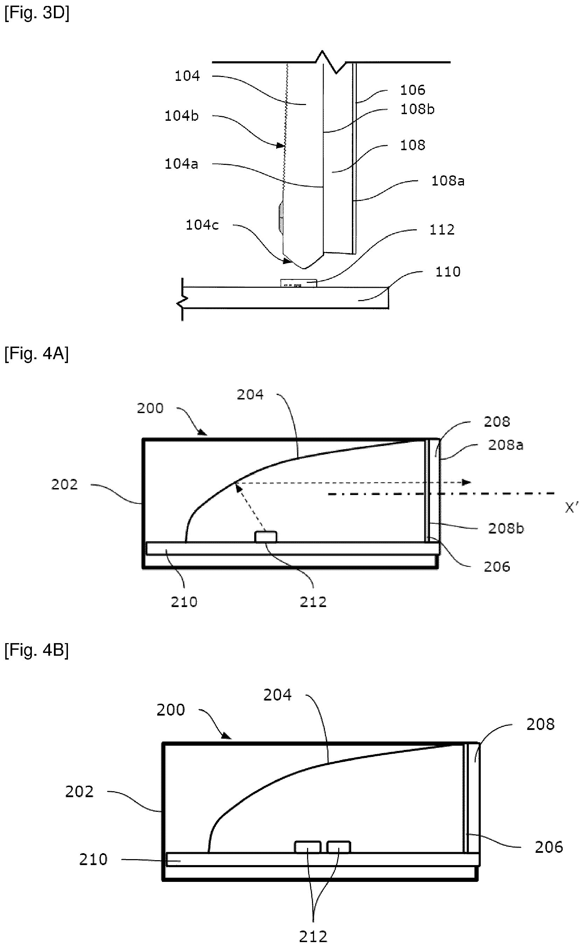

In an alternate embodiment of the present invention, the light-converting material 106 may be integrally formed with the lens 108. The light-converting material 106 may be formed on an inner surface 108b (as shown in Figs. 3A to 3C) or on an outer surface 108b of the lens 108 (as shown in Fig. 3D) by a co-moulding process. Alternatively, the light-converting material 106 may be formed on the inner surface 108b or on the outer surface 108a of the lens 108 by ink printing process i.e. by printing/depositing an ink including the light-converting material 106.

In an alternate embodiment of the present invention, the light-converting material 106 may be provided in the form of a film (as shown in Fig. 1B) and may be positioned between the light guide 104 and the lens 108, as shown in Figs. 3A, 3B and 3C. The film of light-converting material 106 may be applied to the front surface 104a of the light guide 104 by an adhesive. Preferably, the adhesive may have refractive index complementing with the refractive index of the light guide 104 and the refractive index of the light-converting material 106. More preferably, in case of the adhesive being positioned between the light guide 104 and the film of the light-converting material 106, the refractive index of the light-converting material 106 < refractive index of the adhesive < refractive index of the light guide 104.

Alternatively, the film of the light-converting material 106 may be applied to the inner surface 108b of the lens 108 (as shown in Figs. 3A to 3C) or to the outer surface 108a of the lens 108 (as shown in Fig. 3D), by an adhesive. Preferably, the adhesive may have refractive index complementing with the refractive index of the lens 108 and the refractive index of the light-converting material 106. More preferably, in case of the adhesive being positioned between the inner surface 108b of the lens and the film of the light-converting material 106 (Refer Figs. 3A to 3C), the refractive index of the lens 108 < refractive index of the adhesive < refractive index of the light-converting material 106. In case of the adhesive being positioned between the outer surface 108a of the lens 108 and the film of the light-converting material 106 (Refer Fig. 3D), refractive index of the light-converting material 106 < refractive index of the adhesive < the refractive index of the lens 108.

In an embodiment of the present invention, the light-converting material 106 may cover entire front surface 104a of the light guide 104 or entire inner surface 108b of the lens 108 or entire outer surface 108a of the lens 108, as the case may be. Alternatively, the light-converting material 106 may cover only one portion or multiple different segments of the front surface 104a of the light guide 104, or the inner surface 108b of the lens 108, or the outer surface 108a of the lens 108. In an embodiment, the light converting material 106 can be uniformly extending on the entire length of the light guide 104. In an embodiment, the light converting material 106 can be non-uniformly extending on the entire length of the light guide 106. For example, the light-converting material 106 may be provided in shape of a logo or a signature or any other pattern. The optical prisms formed on the back surface 104b of the light guide 104 may correspond to the shape/pattern of the light-converting material 106, i.e. the optical prisms may be formed on a portion or portions of the back surface 104b such that the shape/pattern of the optical prisms correspond to the shape/pattern of the light-converting material 106. Thus, in lit condition of the light source (112), the light is emitted through the lens 108 in the shape of the logo/signature/pattern of light-converting material 106, thereby achieving effect of illuminated logo/signature/pattern.

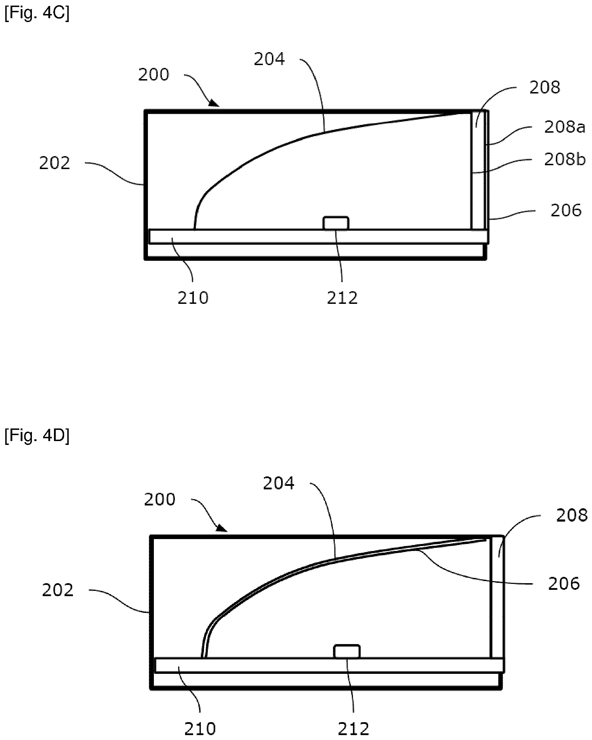

Figs. 4A and 4B illustrate schematic sectional views of a luminous device 200 according an alternate embodiment of the present invention, where the optical component is a reflector 204. As shown in Fig. 4A, at least two light sources 212 may be provided on a PCB 210 and the reflector 204 is provided in a predefined configuration with the light sources 212, inside a housing 202. It is to be noted that in Fig. 4A, only one light source 212 is seen as the light sources 212 are arranged in a line perpendicular to the plane of figure. Alternatively, at least two light sources 212 may be arranged in a line parallel to an optical axis X' of a lens 208, as shown in Fig. 4B. As shown in Fig. 4A, a light-converting material 206 may be provided on an inner surface 208b of the lens 208. The light-converting material 206 may be integrally formed with the lens 208. The light emitted by the light sources 212 is reflected by the reflector 204 and passes through the light converting material 206 before exiting the luminous device 200 through the lens 208.The light-converting material 206 may be formed on the inner surface 208b of the lens 208, as shown in Figs. 4A and 4B, by a co-moulding process or by ink printing process i.e. by printing/depositing an ink including the light-converting material 206. Alternatively, The light-converting material 206 may be formed on the outer surface 208a of the lens 208, as shown in Fig. 4C, by a co-moulding process or by ink printing process i.e. by printing/depositing an ink including the light-converting material 206.

Alternatively, the light-converting material 206 may be provided in the form of a film. The film of the light-converting material 206 may be applied on the inner surface 208b of the lens 208 (as shown in Figs. 4A and 4B) or on the outer surface 208a of the lens 208 (as shown in Fig. 4C), by an adhesive. In a case where the film of the light-converting material 206 is applied on the inner surface 208b of the lens 208, the refractive index of the lens 208 < refractive index of the adhesive < refractive index of the light-converting material 206. Further, in a case where the film of the light-converting material 206 is applied on the outer surface 208a of the lens 208, refractive index of the light-converting material < refractive index of the adhesive < refractive index of the lens 208.

In an alternate embodiment of the present invention, the light-converting material 206 may be provided on a reflective surface 204a of the reflector 204, as shown in Fig. 4D. The light-converting material 206 may be integrally formed on the reflective surface 204a of the reflector 204 by a co-moulding process or by ink printing process i.e. by printing/depositing an ink including the light-converting material 206. Alternatively, the light-converting material 206 may be provided in the form of a film, and the film of the light-converting material 206 may be applied to the reflective surface 204a of the reflector 204 by an adhesive.

In the luminous devices 100, 200 described in the abovementioned embodiments, at least one of the light sources 112, 212 may emit light of a first colour and the remaining light sources 112, 212 may emit light of a second colour. The second colour may be distinctly different from the first colour. Preferably, the first colour may be blue and the second colour may be red or amber. Alternatively, the first colour may be red or amber and the second colour may be blue.

In an embodiment of the present invention, the light-converting material (106, 206) includes cyan emitting phosphor. The cyan emitting phosphor may be any of Quantum dot or Perovskite. Preferably, the cyan emitting phosphor may have any of the compositions - Ca₂LuHf₂Al₃O₁₂ (CLHAO), LiBaBO₃:Eu²⁺ etc.

The composition of the light-converting material 106, 206 converts the colour of light passing through the light-converting material (106, 206). In above described luminous devices 100, 200, when only the light source(s) 112, 212 emitting light of blue colour is/are turned ON, the light-converting material 106, 206 converts the blue light from the light source(s) 112, 212 into cyan/turquoise coloured light. Therefore, the light exiting the luminous device 100, 200 has cyan/turquoise colour. Thus, the luminous device 100, 200 is lit in cyan/turquoise colour to achieve desired lighting function. When only the light source(s) 112, 212 emitting light of red or amber colour is/are turned ON, the light-converting material 106, 206 transmits red colour light towards outside. When the light source(s) 112, 212 emitting light of blue colour and the light source(s) 112, 212 emitting light of red/amber colour, are turned ON, the light-converting material 106, 206 converts the mixed blue and red/amber light into white light. Hence, the light exiting the luminous device 100, 200 has white colour. Thus, the luminous device 100, 200 is lit in white colour to achieve desired lighting function. Therefore, the luminous device 100, 200 may be able to emit light of three different colours i.e. cyan/turquoise, red, and white with only two colours i.e. blue and red/amber of light obtained from the light sources 112, 212.

In an embodiment of the present invention, the luminous device 100, 200 may be lit in cyan/turquoise colour for achieving lighting functions such as ADS marker etc. The luminous device 100, 200 may be lit in red colour for achieving lighting functions such as turn indication, braking indication etc. The luminous device 100, 200 may be lit in white colour for achieving lighting functions such as DRL, PL, reverse indication etc. Further, the luminous device 100, 200 may be lit in any of the cyan/turquoise, or red, or white colour for decorative features such as illuminated logo, illuminated grill, animation etc.

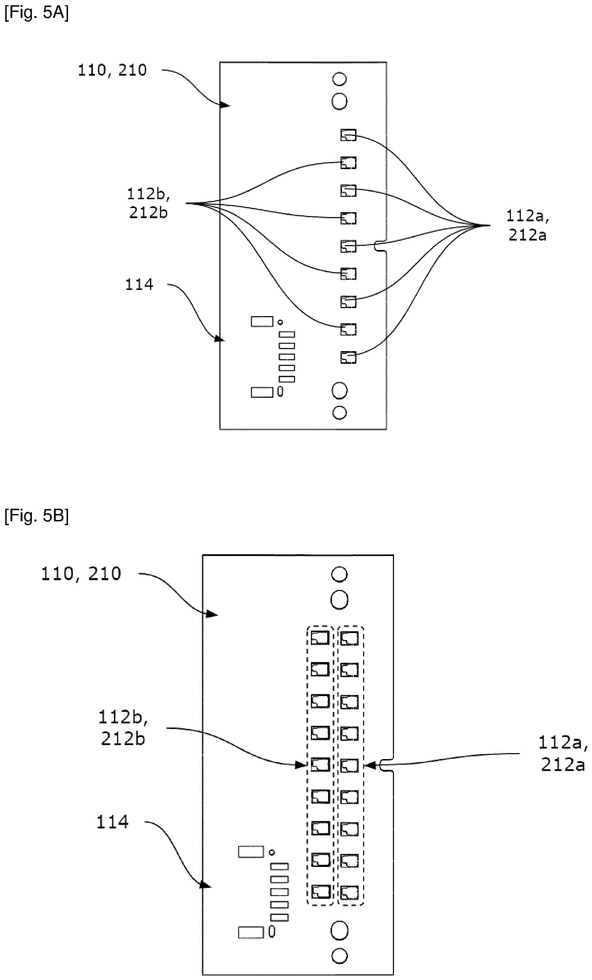

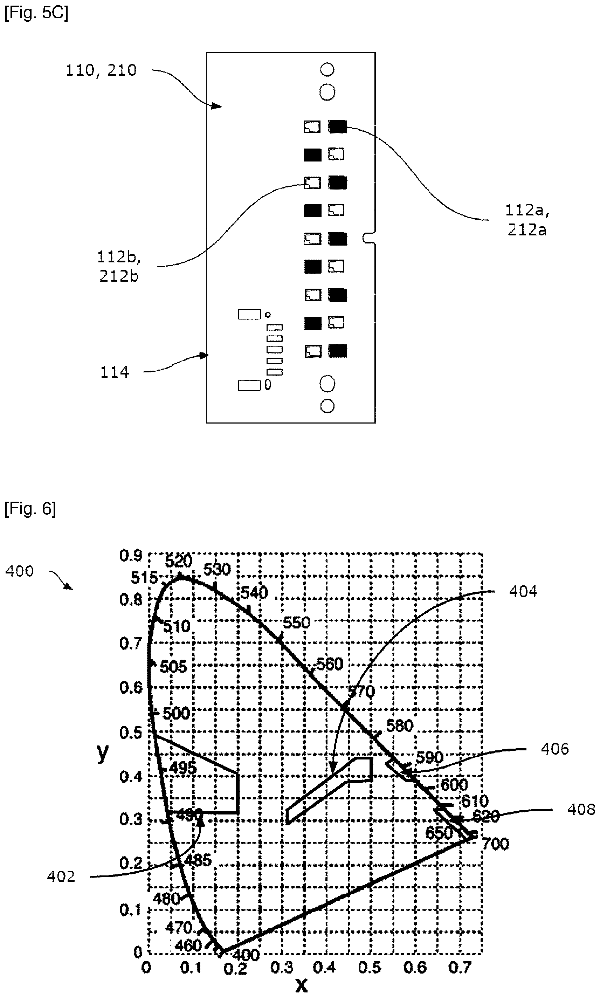

Figs. 5A, 5B and 5C illustrate top view of the PCB 110, 210 with different arrangements of the light sources 112, 212. As shown in Fig. 5A, the light sources 112, 212 may be provided in a single line and alternate light sources may be grouped together to define a first group of light sources 112a, 212a and a second group of light sources 112b, 212b. Alternatively, the light sources 112, 212 may be arranged in two parallel lines and each line of light sources 112, 212 may be grouped as the first group of light sources 112a, 212a and the second group of light sources 112b, 212b, as shown in Fig. 5B. Alternatively, the light sources 112, 212 may be arranged in two parallel lines and the light sources 112, 212 may be grouped as the light sources indicated by dark block belonging to the first group of light sources 112a, 212a and the light sources indicated by transparent block belonging to the second group of light sources 112b, 212b, as shown in Fig. 5C. It is to be understood that, Figs. 5A, 5B and 5C show only some possible arrangements of light sources 112, 212, however the light sources 112, 212 may be arranged in any other possible arrangement. The first group of light sources 112a, 212a may emit light of the first colour and the second group of light sources 112b, 212b may emit light of the second colour. Alternatively, the first group of light sources 112a, 212a may emit light of the second colour and the second group of light sources 112b, 212b may emit light of the first colour. Preferably, the colour emitted by the second group of light sources 112b, 212b is distinctly different from the colour emitted by the first group of light sources 112a, 212a.

Fig. 6 illustrates a chromaticity diagram 400 showing the regions of the diagram corresponding to cyan/turquoise colour, white colour, amber colour and red colour, emitted by the luminous device 100, 200. The region 402 defined on the chromaticity diagram by connecting the coordinates x=0.012, y=0.495; x=0.200, y=0.400; x=0.200, y=0.320 & x=0.040, y=0.320, represents the colour acceptable as cyan/turquoise colour. The light emitted by the light sources 112, 212 is converted by the light converting material 206 to obtain the cyan/turquoise colour. Further, the region 404 defined on the chromaticity diagram by connecting the coordinates x=0.310, y=0.348; x=0.453, y=0.440; x=0.500, y=0.440; x=0.500, y=0.382; x=0.443, y=0.382; x=0.310, y=0.283; x=0.310, y=0.348, represents the colour acceptable as white colour. The light emitted by the light sources 112, 212 is converted by the light converting material 206 to obtain the white colour. The region 406 defined on the chromaticity diagram by connecting the coordinates x=0.560, y=0.440; x=0.545, y=0.425; x=0.597, y=0.390; x=0.610, y=0.390, represents the colour acceptable as amber colour. The region 408 defined on the chromaticity diagram by connecting the coordinates x=0.665, y=0.335; x=0.645, y=0.335; x=0.722, y=0.259, represents the colour acceptable as red colour. Further, the region of the chromaticity diagram corresponding to red colour may also be defined by coordinates x=0.670, y=0.330; x=0.650, y=0.330; x=0.722, y=0.259.

Alternatively, the blue colour emitted by the light source 112, 212, may be defined as light having wavelength in the range of 420nm to 491nm. The red colour emitted by the light source 112, 212 may be defined as light having wavelength in the range of 610nm to 680nm. The amber colour emitted by the light source 112, 212, may be defined as light having wavelength in the range of 585nm to 595nm.

The luminous device 100, 200 may be used in motor vehicle for different lighting and/or signaling functions such as ADS (Adaptive Driving System) marker, turn indication, DRL (Daytime Running Light), PL (parking light), reverse indication, tail lamp, autonomous driving indication, electric car indication. Further, the luminous device 100, 200 may also be used for styling and/or decorative purposes such as illuminated grills, illuminated logo, animation, welcome light etc.

A vehicle lighting module may be provided incorporating the luminous device 100,200 wherein the PCB 110, 210 having plurality of light sources 112, 212, the optical component i.e. the light guide 104 or the reflector 204, the light-converting material 106, 206, and the lens 108, 208 are arranged in a predefined configuration inside the housing 102, 202. There may be any other components provided in the vehicle lighting module for proper and desired functioning of the lighting module. The vehicle lighting module may be a head lamp or a tail lamp or other lighting module, performing different lighting functions such as ADS (Adaptive Driving System) marker, DRL (Daytime Running Light), PL (parking light), reverse indication, autonomous driving indication, electric car indication, illuminated grills, illuminated logo, animation, or welcome light etc.

The person skilled in the art realizes that the present invention by no means is limited to the preferred embodiments described above. On the contrary, many modifications and variations are possible within the scope of the appended claims. In addition, the skilled person readily realizes that the different embodiments described herein may be combined freely to obtain new combinations.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantages.

**LIST OF REFERENCE SIGNS**

| | |
|---|---|
| 100, 200 | Luminous device |
| 102, 202 | Housing |
| 102a | First housing part |
| 102b | Second housing part |
| 104 | Light guide |
| 104a | Front surface |
| 104b | Back surface |
| 104c | Collector |
| 1041, 1042 | Lateral side of the light guide |
| 1043, 1044 | Longitudinal side of the light guide |
| 106, 206 | Light-converting material |
| 108, 208 | Lens |
| 108a, 208a | Outer surface of the lens |
| 108b, 208b | Inner surface of the lens |
| 110, 210 | PCB |
| 112, 212 | Light sources |
| 112a, 212a | First group of light sources |
| 112b, 212b | Second group of light sources |
| 114 | Connector |
| 204 | Reflector |
| 204a | Reflective surface |
| 400 | Chromaticity diagram |
| 402 | Cyan/turquoise colour region |
| 404 | White colour region |
| 406 | Amber colour region |
| 408 | Red colour region |

## Claims

1. A luminous device (100, 200), comprising:
at least two light sources (112, 212);
an optical component (104, 204) configured to distribute light emitted by the light sources (112, 212); and
a light-converting material (106, 206) configured to convert a colour of the light emitted by the light sources (112, 212) or to convert a colour of the light distributed by the optical component (104, 204), into a different colour,
wherein the colours of the light emitted by the light sources (112, 212) and composition of the light-converting material (106, 206) are configured to obtain a number of colours of light exiting the luminous device (100, 200), said number of colours being greater than the number of colours of the light emitted by the light sources (112, 212).

2. The luminous device (100, 200) according to claim 1, wherein the optical component (104, 204) distributes light emitted by the light sources (112, 212), outward through a lens (108, 208).

3. The luminous device (100, 200) according to claim 1 or claim 2, wherein the light-converting material (106, 206) is integrally formed with the optical component (104, 204) by co-moulding process or by printing an ink including the composition of the light-converting material (106, 206) on the optical component (104, 204).

4. The luminous device (100, 200) according to claim 2, wherein the light-converting material (106, 206) is integrally formed with the lens (108, 208) by co-moulding process or by printing an ink including the composition of the light-converting material (106, 206) on the lens (108, 208).

5. The luminous device (100, 200) according to claim 1 or claim 2, wherein the light-converting material (106, 206) is formed as a film, and the film is applied to the optical component (104, 204) by an adhesive.

6. The luminous device (100, 200) according to claim 2, wherein the light-converting material (106, 206) is formed as a film and the film is applied to the lens (108, 208) by an adhesive.

7. The luminous device (100, 200) according to any of preceding claims, wherein the optical component (104, 204) includes a light guide (104) comprising a plurality of optical prisms provided on a back surface (104b), the optical prisms being configured to direct the light received in the light guide (104) through a collector (104c), through a front surface (104a).

8. The luminous device (100, 200) according to claim 7, wherein the light guide (104) is a light guide plate.

9. The luminous device (100, 200) according to claim 7 or claim 8, wherein the plurality of optical prisms are provided in a pattern corresponding to a pattern of the light-converting material (106, 206).

10. The luminous device (100, 200) according to any of claims 1 to 6, wherein the optical component (104, 204) is a reflector (204).

11. The luminous device (100, 200) according to any of preceding claims, wherein the plurality of light sources (112, 212) include a first group of light sources (112a) emitting light of a first colour, and a second group of light sources (112b) emitting light of a second colour.

12. The luminous device (100, 200) according to claim 11, wherein the first colour is blue, and the second colour is red or amber, or vice versa.

13. The luminous device (100, 200) according to claim 12, wherein the light-converting material (106, 206) is configured to emit light of cyan/turquoise colour when the light source(s) emitting blue light is/are turned ON and the light source(s) emitting red or amber light are turned OFF.

14. The luminous device (100, 200) according to claim 12, wherein the light-converting material (106, 206) is configured to emit light of white colour when the light source(s) emitting blue light and the light source(s) emitting red or amber light are turned ON.

15. The luminous device (100, 200) according to claim 12, wherein the light-converting material (106, 206) is configured to emit light of red colour when the light source(s) emitting red or amber light is/are turned ON and the light source(s) emitting blue light is/are turned OFF.

16. The luminous device (100, 200) according to any of the preceding claims, wherein the composition of the light-converting material (106, 206) includes cyan emitting phosphor.

17. A vehicle lighting module, comprising:
a housing (102, 202) configured to accommodate a PCB (110, 210); and
the luminous device (100, 200) according to any of the preceding claims, arranged inside the housing (102, 202),
wherein the light sources (112, 212) are arranged on the PCB (110, 210) in a predefined configuration.
